# EUROPÄISCHE PATENTANMELDUNG

(11) **EP 0 597 136 A1**
(43) Veröffentlichungstag der Anmeldung: **18.05.1994**
(21) Anmeldenummer: 92119120.1
(22) Anmeldetag: 08.11.1992
(51) Int. Cl.: B01D 46/00, B23K 9/32

(54) **Vorrichtung zum Abfördern und Reinigen von Lötrauch**

(71) Anmelder: PRENCO AG, FL-9490 Vaduz (LI)
(72) Erfinder: Köchli, Walter, CH-3613 Steffisburg (CH)
(74) Vertreter: Blum, Rudolf Emil Ernst

(57) **Zusammenfassung**

Vor den Filtern (2,3,4) ist eine Windkesselkammer (8) angeordnet. Die Fördereinrichtung enthält eine doppeltwirkende Kolbenpumpe (5). Durch die Windkesselkammer (8) wird ein Pulsieren des Luft- bzw. Lötrauchstromes bei der Anschlussöffnung (6) vermieden. Von den Filtern (2,3,4) führen flexible Leitungen (9) zur Pumpe (5), diese ist von einem Elektromotor (11) angetrieben. Die Pumpe (5) und der Elektromotor (11) sind über Schwingungsdämpfer (13,14) mit dem Gehäuse (1) verbunden. Die aus dem Auslass (16) der Pumpe (5) austretende Reinluft verlässt das Gehäuse (1) durch den Austritt (7). Die aus der Pumpe (5') austretende Reinluft kühlt sich ab durch Expansion und umströmt kühlend die Pumpe und den Motor. Durch die axiale Anordnung der Filter (2,3,4), gefolgt von der Kolbenpumpe (5) ist eine äusserst gedrängte Bauart der Vorrichtung erreicht.

## Beschreibung

Die vorliegende Erfindung betrifft eine Vorrichtung zum Abfördern und Reinigen von Lötrauch, der durch Punktabsaugung von einer jeweiligen Arbeitsstelle entfernt wird, welche Vorrichtung ein Gehäuse aufweist, in welchem Filter und eine Fördereinrichtung angeordnet sind, und welches Gehäuse eine Anschlussöffnung zur Verbindung mit einer Zufuhrleitung für angesaugten Lötrauch und einen Austritt für Reinluft aufweist.

Beim Löten, beispielsweise zur Herstellung von Leiterplatten, entsteht als unerwünschte Begleiterscheinung Lötrauch. Dieser Lötrauch kann beispielsweise gesundheitsschädlich sein oder sich an unerwünschten Stellen, z.B. auf dem herzustellenden Erzeugnis oder der näheren Umgebung, niederschlagen. Aus diesem Grunde werden Vorkehrungen zum Absaugen des Lötrauches getroffen. Es gibt hierzu allgemein zwei Verfahren. Gemäss dem einen Verfahren ist über der jeweiligen Arbeitsstelle eine Abzugshaube angeordnet, durch welche Lötrauch und offensichtlich auch Umgebungsluft hindurch zu einer zentralen Pumpeneinrichtung gefördert wird, wobei an einer Stelle entlang dem Strömungsweg Filter vorhanden sind.

Ein weiteres Verfahren ist die sogenannte Punktabsaugung. Bei dieser wird durch ein unmittelbar neben dem Lötkolben vorhandenes Rohrstück der Lötrauch direkt abgesogen, welches Rohrstück üblicherweise über eine flexible Leitung mit einer Vorrichtung zum Abfördern und Reinigen des Lötrauches verbunden ist, welche Vorrichtung allgemein eine Pumpe und Filter aufweist. Als Pumpen werden solche mit Flügelräder, also rotierende Pumpen eingesetzt. Dabei kann jeweils eine solche Abfördervorrichtung nur einer Arbeitsstelle zugeordnet sein oder sie kann über T-förmige Rohrstücke mehreren Arbeitsstellen zugeordnet sein.

Die bekannten Vorrichtungen zum Abfördern und Reinigen von Lötrauch sind äusserst platzaufwendig, erzeugen störende Geräusche und neigen weiter zu Ueberhitzung, so dass sie nicht für einen Dauerbetrieb geeignet sind.

Hier will die Erfindung Abhilfe schaffen. Die Erfindung, wie sie in den Ansprüchen gekennzeichnet ist, löst die Aufgabe, eine Vorrichtung zum Abfördern und Reinigen von Lötrauch zu schaffen, bei welcher die Fördereinrichtung eine Verdrängerpumpe aufweist, der eine Windkesselkammer zugeordnet ist, welche Verdrängerpumpe einschliesslich ihrem Antriebsmotor in einer Kühlkammer angeordnet ist.

Die durch die Erfindung erreichten Vorteile sind im wesentlichen darin zu sehen, dass keine Gefahr der Ueberhitzung der Vorrichtung vorhanden ist. Ein Pulsieren des angesaugten Luftstromes an der Arbeitsstelle aufgrund der verwendeten Kolbenpumpe wird durch die vorgeschaltete Windkesselkammer vermieden. Weiter lässt sich die Vorrichtung mit kleinen, handlichen Abmessungen bauen.

Im folgenden wird die Erfindung anhand von lediglich einen Ausführungsweg darstellenden Zeichnungen näher erläutert.

Abbildung 1 zeigt einen Schnitt entlang der Linie I-I der Figur 2.

Abbildung 2 zeigt einen Längsschnitt durch eine erfindungsgemässe Vorrichtung zum Abfördern und Reinigen von Lötrauch.

Die Vorrichtung weist ein zylinderförmiges Gehäuse 1 auf, das mit vier gummielastischen Standfüssen ausgerüstet ist, von denen drei 24,25,26 in den Zeichnungen sichtbar sind. Das zylinderförmige Gehäuse 1 ist bei beiden Enden durch jeweils einen Deckel 17 bzw. 18 verschlossen. Diese Dekkel 17,18 sind klemmend im Gehäuse 1 eingesetzt. Dabei ist zwischen dem Deckel 17 und dem Gehäuse 1 ein nachgiebiger Ring 27 und zwischen dem Deckel 18 und dem Gehäuse 1 ein nachgiebiger Ring 28 angeordnet. Diese Ringe 27,28 wirken auch dichtend, so dass kein Lecken aus dem Innenraum des Gehäuses 1 entlang der Deckel 17,18 erfolgen kann.

Der Deckel 17 weist eine Anschlussöffnung 6 für eine Lötrauchleitung auf. Diese Lötrauchleitung besteht, wie allgemein bekannt, aus einem flexiblen Schlauchstück, welches bei einem Ende in die Anschlussöffnung 6 eingesteckt wird und beim anderen Ende mit dem eingangs genannten Rohrstück, das beispielsweise auf oder in einem Lötkolben montiert ist, verbunden ist. Da der Schlauch, mögliche T-Stücke und das Rohrstück allgemein bekannte Ausbildungen sind, wird darauf nicht näher eingegangen und sie sind auch nicht eingezeichnet.

Bei der Anschlussöffnung 6 ist eine Druckfeder 19 angeordnet. Diese drückt gegen Filter 2,3,4 und presst diese gegen eine Trennwand 20 im Gehäuse 1. Bei dieser beispielsweise gezeichneten Ausführung sind die Filter 3,4 Staub- bzw. Partikelfilter und der Filter 2 ein auf Aktivkohle basierender Gasfilter. Zwischen dem Aktivkohlefilter 2 und der Trennwand 20 ist weiter ein Dichtungsring 23 angeordnet, der verhindert, dass durch die Anschlussöffnung 6 eintretender Lötrauch zwischen den Aussenwänden der Filter 2,3, 4 und dem Gehäuse 1 direkt zum Bereich vor der Trennwand 20 hindurch leckt. Es ist ersichtlich, dass ein Austauschen der Filter 2,3,4, bzw. das Montieren derselben äusserst einfach ist, da sie lediglich durch den Druck der Feder 19 arretiert sind, also keine besonderen weiteren Vorkehrungen, bzw. Arbeiten zum Herausnehmen gebrauchter Filter und Einsetzen bzw. Arretieren neuer Filter notwendig sind.

Aus der Figur 2 ist ersichtlich, dass zwischen dem Deckel 17 und dem in Strömungsrichtung gesehenen ersten Filter 4 ein Abstand vorhanden ist, womit eine Windkesselkammer 8 gebildet ist. Durch diese Windkesselkammer 8 ist sichergestellt, dass irgendwelche von der noch zu beschreibenden Förderpumpe 5 stammenden Pulsierungen nicht durch die Anschlussöffnung 6 auf das Ansaugemundstück beim Lötkolben übertragen werden, so dass das Absaugen, die Luft- bzw. Lötrauchbewegung bei der jeweiligen Arbeitsstelle gleichmässig und nicht etwa störend pulsierend ist.

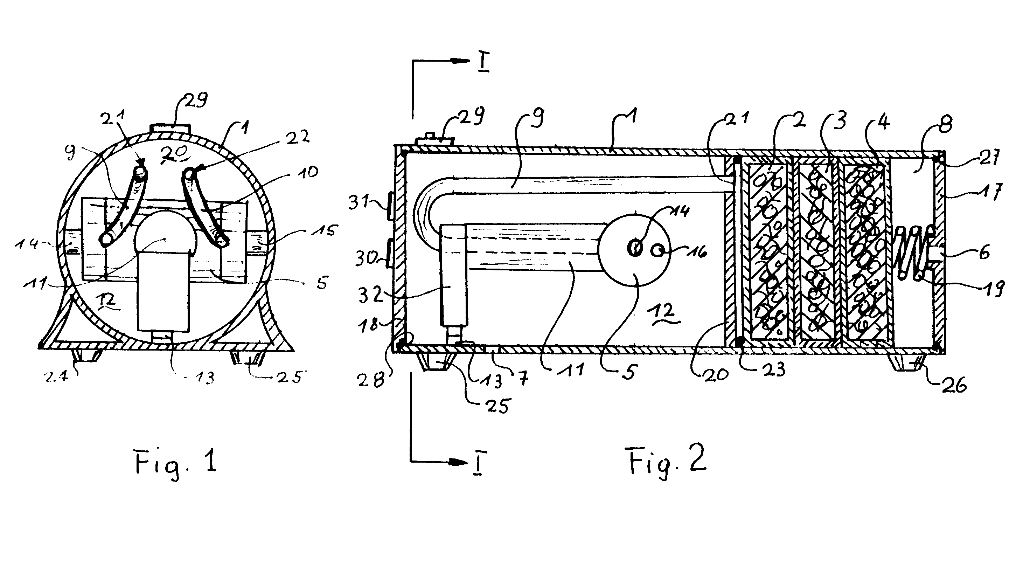

In der Trennwand 20 sind zwei Oeffnungen 21, 22 (siehe auch Figur 1) ausgebildet. Von diesen Oeffnungen 21,22 führt jeweils eine flexible Leitung 9,10 zur Förderpumpe 5. Bei dieser Ausführung sind diese Leitungen 9,10 Silikonschläuche, in dessen Innenraum ein spiralförmiger Draht, eine Stützspirale eingesetzt ist.

Die Förderpumpe ist eine doppelt wirkende Kolbenpumpe. Sie weist zwei Auslasse auf, von denen der eine, durch die Bezugsziffer 16 angedeutet, in der Figur 2 eingezeichnet ist. Diese Kolbenpumpe 5 ist fest bzw. starr mit einem Elektromotor 11 verbunden. Bei dieser Ausführung ist der Elektromotor ein drehzahlregelbarer Kollektormotor.

In den Figuren sind entsprechend der Ein- und Ausschalter 29, die Steckdose 30 zur Stromzufuhr und der Drehknopf 31 für die Drehzahlregelung des Motors 11 eingezeichnet. Aus Gründen der Klarheit sind die dazugehörigen elektrischen Leitungen und weitere Konstruktionseinzelheiten nicht eingezeichnet. Der Elektromotor 11, der mit der Pumpe 5 starr verbunden ist, d.h. deren Gehäuse sind starr miteinander verbunden, ist bei einem Ende über einen Träger 32 mit dem Gehäuse 1 verbunden. Dabei ist zwischen dem unteren Ende des Trägers 32 und dem Gehäuse 1 ein gummielastischer Schwingungsdämpfer 13 angeordnet. Ebenfalls ist die in dieser Ausführung liegend gezeichnete Kolbenpumpe 5 bei beiden Enden über jeweils einen elastomeren Schwingungsdämpfer 14 bzw. 15 mit dem Gehäuse 1 verbunden. Die Kolbenpumpe 5 und der Motor 11 sind somit als Konstruktionseinheit an drei Punkten schwingungsdämpfend aufgehängt. Dazu muss bemerkt werden, dass auch andere Stellungen der Kolbenpumpe 5 möglich sind. Sie könnte auch anstatt waagrecht liegend auch vertikal stehend im Gehäuse 1 eingebaut sein. Beim Bereich des Schwingungsdämpfers 13 weist das Gehäuse 1 den Austritt 7 für die Reinluft auf, die bei den jeweiligen Auslässen 16 der Kolbenpumpe 5 austritt. Es ist ersichtlich, dass der Austritt 7 einen beträchtlichen Abstand von dem gezeichneten Auslass 16 aufweist. Der Grund dazu ist, dass die aus dem Auslass 16 austretende Reinluft in den Innenraum des Gehäuses 1 expandiert und sich damit abkühlt, wobei die somit etwas gekühlte Reinluft die Kolbenpumpe 5 und den Elektromotor 11 umströmt, womit eine Kühlwirkung erzielt ist, so dass die Gefahr des Ueberhitzens nicht mehr besteht.

Aus den Figuren ist ersichtlich, dass die flexiblen Leitungen 9,10 eine Schlaufe mit einer beträchtlichen Länge bilden. Der Grund dazu ist, dass beim Montieren der Vorrichtung die Leitungen 9 und 10 an die Kolbenpumpe 5 bzw. den Oeffnungen 21,22 in der Trennwand 20 eingesteckt werden können, wenn die Pumpe 16 mit dem Elektromotor 11 noch ausserhalb des Gehäuses 1 angeordnet sind, also noch im ausgbauten Zustand vorliegen. Entsprechend ist das Einstecken der flexiblen Leitungen 9, 10 denkbar einfach, da im eingebauten Zustand von Pumpe 5 und Elektromotor 11 das Anschliessen dieser Leitungen erhebliche Mühe bereiten würde.

## Patentansprüche

1. Vorrichtung zum Abfördern und Reinigen von Lötrauch, der durch Punktabsaugung von einer jeweiligen Arbeitsstelle entfernt wird, welche Vorrichtung ein Gehäuse (1) aufweist, in welchem Filter (2,3,4) und eine Fördereinrichtung (5,11) angeordnet sind, und welches Gehäuse (1) eine Anschlussöffnung (6) zur Verbindung mit einer Zufuhrleitung für angesaugten Lötrauch und einen Austritt (7) für Reinluft aufweist, dadurch gekennzeichnet, dass im Gehäuse zwischen der Anschlussöffnung (6) und den Filtern (2,3,4) stromaufwärts derselben eine Windkesselkammer (8) angeordnet ist, dass die Filter (2, 3,4) trommelförmige, axial durchströmte Gebilde sind und die Fördereinrichtung (5,11) eine von einem Motor (11) getriebene Verdrängerpumpe (5) aufweist, dass die Filter (2,3,4) stromabwärts über eine flexible Leitungsanordnung (9,10) mit der Verdrängerpumpe (5) in Verbindung stehen, welcher Motor (11) und welche Verdrängerpumpe (5) in einer im Gehäuse (1) ausgebildeten Kühlkammer (12) angeordnet und über Schwingungsdämpfer (13,14,15) mit der Gehäusewand verbunden sind, und dass die Verdrängerpumpe (5) mindestens einen Auslass (16) aufweist, der in die Kühlkammer (12) mündet und der Austritt (7) für Reinluft in einem Abstand vom mindestens einen Auslass (16) der Verdrängerpumpe (5) angeordnet ist, derart, dass sich die aus dem Auslass (16) der Verdrängerpumpe (5) austretende Reinluft durch Expansion in die Kühlkammer (12) abgekühlt und den Motor (11) und die Verdrängerpumpe (5) kühlend umströmt.

2. Vorrichtung nach Anspruch 1, dadurch gekennzeichnet, dass das Gehäuse (1) zylinderförmig ist und bei beiden Enden durch jeweils einen Deckel (17,18) verschlossen ist, dass die Anschlussöffnung (6) zur Verbindung mit einer Zufuhrleitung für angesaugten Lötrauch in einem (17) der Deckel ausgebildet ist, von welchem Deckel (17) eine eine Druckkraft auf die Filter (2,3,4) ausübende Druckfeder (19) absteht, um dieselben gegen eine Trennwand (20) im Gehäuse (1) zu drücken, die Oeffnungen (21,22) aufweist, an denen die flexiblen Leitungen (9,10) angeschlossen sind.

3. Vorrichtung nach Anspruch 1 oder 2, dadurch gekennzeichnet, dass die Verdrängerpumpe (5) eine doppelt wirkende Kolbenpumpe ist, die mit dem Motor (11) starr verbunden ist, und dass die Verdrängerpumpe (5) und der Motor (11) an insgesamt drei Stellen über Gummipuffer (13,14,15) mit dem Gehäuse (1) verbunden sind.

4. Vorrichtung nach einem der vorangehenden Ansprüche, dadurch gekennzeichnet, dass zwischen den Filtern (2,3,4) und der Trennwand (20) ein Dichtungsring (23) angeordnet ist, der ein Durchlecken von Lötrauch zwischen den Filtern (2,3,4) und der Gehäuseinnenwand zur flexiblen Leitungsanordnung (9,10) verhindert.

5. Vorrichtung nach einem der vorangehenden Ansprüche, dadurch gekennzeichnet, dass zwei flexible Leitungen (9,10) vorhanden sind, deren Länge jeweils derart grösser als die axiale Länge der Kühlkammer (12) ist, so dass die Leitungen (9,10) bei aus dem Gehäuse (1) ausgebautem Zustand an die Zwischenwand (20) und die Pumpe (5) anschliessbar sind, um die Montage zu erleichtern.
